# EUROPÄISCHE PATENTSCHRIFT

(11) **EP 3 630 483 B1**
(45) Veröffentlichungstag und Bekanntmachung des Hinweises auf die Patenterteilung: **27.10.2021**
(21) Anmeldenummer: 17816738.3
(22) Anmeldetag: 13.12.2017
(51) Int. Cl.: B32B 17/10

(54) **VERBUNDSCHEIBE UND VERFAHREN ZUM HERSTELLEN DER VERBUNDSCHEIBE**
COMPOSITE PANEL AND METHOD FOR PRODUCING SAME
DISQUE COMPOSITE ET SON PROCÉDÉ DE FABRICATION

(30) Priorität: 24.05.2017 EP 17172622
(43) Veröffentlichungstag der Anmeldung: 08.04.2020
(73) Patentinhaber: SAINT-GOBAIN GLASS FRANCE, 92400 Courbevoie (FR)
(72) Erfinder: SCHALL, G nther, 52372 Kreuzau (DE); GIER, Stephan, 66359 Bous (DE); BROCKER, Richard, 41068 M nchengladbach (DE); BALDUIN, Michael, 52477 Alsdorf (DE); BORCHMANN, Nikolai, 52134 Herzogenrath (DE)
(74) Vertreter: Gebauer, Dieter Edmund
(86) Internationale Anmeldenummer: PCT/EP2017/082504
(87) Internationale Veröffentlichungsnummer: WO 2018/215082

(56) Entgegenhaltungen:
- EP-A1- 2 674 295
- EP-A1- 2 881 376
- EP-A1- 3 029 000
- EP-A1- 3 029 001
- EP-A1- 3 029 002
- EP-A1- 3 029 003
- WO-A1-95/19885
- WO-A1-2008/003789
- WO-A1-2016/030284

## Beschreibung

Die Erfindung betrifft eine Verbundscheibe sowie ein Verfahren zum Herstellen der Verbundscheibe.

Verbundscheiben, insbesondere solche zur Verwendung als Windschutzscheibe eines Kraftfahrzeugs, weisen zwei Scheiben und mindestens eine zwischen den beiden Scheiben befindliche Thermoplast-Folie auf. In aller Regel ist zumindest eine Scheibe in Form eines Flachglases ausgebildet, welches in der industriellen Serienfertigung häufig im Floatglasverfahren hergestellt wird.

Beim Floatglasverfahren wird eine Glasschmelze von einer Seite her auf ein Bad aus flüssigem Zinn (Floatbad) geleitet. Beispielsweise beträgt die Temperatur am Eingang des Zinnbads ca. 1000 °C. Die leichtere Glasschmelze schwimmt auf dem Zinn und breitet sich auf der Zinnoberfläche gleichmäßig aus. Durch die Oberflächenspannung des Zinns bildet das Glas eine sehr glatte Oberfläche aus. An einem kühleren Ende des Zinnbads wird das erstarrte Glas in Bandform fortlaufend herausgezogen und anschließend gekühlt. Nach ausreichendem Kühlen werden vom Glasband jeweils Glastafeln in gewünschter Größe abgelängt.

Durch die Verteilung der Glasschmelze auf dem Zinnbad bestimmt sich eine Gleichgewichtsdicke des Glases, welche jedoch für viele Anwendungen zu groß ist. Um die Scheibendicke zu vermindern, wird das schon erstarrte Glas durch aktiv angetriebene (Top-)Rollen aus dem Zinnbad gezogen, wodurch eine Dehnung des Glasbands erreicht wird. Hierbei kann über die Geschwindigkeit der Rollen die Dicke des Glases eingestellt werden, wobei für die Herstellung von dünneren Gläsern eine größere Geschwindigkeit und entsprechend für dickere Gläser eine geringere Geschwindigkeit der Rollen eingestellt wird.

Wie dem Fachmann bekannt ist, weist das im Floatglasverfahren hergestellte Glas durch das Herausziehen aus dem Zinnbad eine gewisse Unebenheit bzw. Welligkeit seiner Oberflächen auf. Demnach verfügen beide Glasoberflächen über längliche Erhebungen und Einsenkungen in paralleler Anordnung, die sich jeweils in Zugrichtung des Glasbands aus dem Zinnbad erstrecken. Die länglichen Erhebungen und Einsenkungen entsprechen Wellenbergen und Wellentälern, die senkrecht zur Zugrichtung alternierend angeordnet sind. Dem Fachmann sind diese länglichen Strukturen des Glases auch unter dem Begriff "Floatlinien" (float lines) bekannt. Je dünner das Glas ist, desto größer muss die Zugwirkung am Glasband sein, was wiederum zur Folge hat, dass die Floatlinien stärker ausgeprägt sind. In der industriellen Serienfertigung von Flachglas werden typischer Weise rechteckige Glastafeln mit ihrer längeren Abmessung in Bandrichtung abgelängt, so dass sich die Floatlinien parallel zur längeren Abmessung der Glastafeln erstrecken.

Bekannt ist auch die industrielle Herstellung von Dünngläsern im Fusion-Draw-Verfahren. Hierbei wird die Glasschmelze typischer Weise über eine Auslaufdüse aus dem Schmelzofen durch Rollen nach unten abgezogen. Beim Fusion-Draw-Verfahren entstehen analog zum Floatglasverfahren längliche Erhebungen und Einsenkungen der Glasoberflächen, entsprechend Wellenbergen und Wellentälern, die senkrecht zur Zugrichtung alternierend angeordnet sind, so dass auch hier die Glasoberflächen eine geringfügige Welligkeit aufweisen. Dem Fachmann sind diese länglichen Strukturen des im Fusion-Draw-Verfahren hergestellten Dünnglases unter dem Begriff "Ziehlinien" (draw lines) bekannt.

Auch die Thermoplast-Folien, die durch Extrusionsverfahren hergestellt werden, sind typischerweise von einer herstellungsbedingten, unerwünschten Welligkeit gekennzeichnet. Diese äußert sich in Form von Dickenänderungen (längliche Erhebungen und Einsenkungen) quer zur Extrusionsrichtung. Diese unerwünschte Welligkeit ist zu unterscheiden von einer bewusst erzeugten Rauigkeit, welche typischerweise in die Thermoplast-Folien eingeprägt werden, um die Entlüftung des Schichtstapels bei der Herstellung der Verbundscheibe zu begünstigen. Die unerwünschte Welligkeit und die bewusst erzeugte Rauigkeit unterscheiden sich wesentlich hinsichtlich des Abstands benachbarter länglicher Erhebungen beziehungsweise länglicher Einsenkungen. Die bewusst erzeugte Rauigkeit ist beispielsweise in EP 3 029 000 A1, EP 3 029 001 A1, EP 3 029 002 A1, EP 3 029 003 A1, EP 2 881 376 A1, EP 2 674 295 A1, WO 2016/030284 A1, WO 95/19885 A1 und WO 2008/003789 A1 beschrieben.

In der praktischen Anwendung können die Float- bzw. Ziehlinien zu einer nachteiligen Beeinträchtigung der optischen Eigenschaften des Flachglases führen, da die Welligkeit des Flachglases zu einer Linsenwirkung mit einer lokal verschiedenen optischen Brechkraft führt. Dieser ist besonders ausgeprägt, wenn sich die Float- bzw. Ziehlinien mit der herstellungsbedingten Welligkeit der Thermoplast-Folie ungünstig überlagern. Wird beispielsweise bei Windschutzscheiben in Kraftfahrzeugen der Kopf von einer zur anderen Seite oder von oben nach unten geneigt, können durch die lokal verschiedene optische Brechkraft Gegenstände in Durchsicht verzerrt erscheinen.

Der Erfindung liegt die Aufgabe zugrunde, eine Verbundscheibe mit verbesserten optischen Eigenschaften sowie ein Verfahren zum Herstellen einer solchen Verbundscheibe zur Verfügung zu stellen.

Diese und weitere Aufgaben werden nach dem Vorschlag der Erfindung durch eine Verbundscheibe mit den Merkmalen von Patentanspruch 1 gelöst. Vorteilhafte Ausgestaltungen der Erfindung ergeben sich aus den Unteransprüchen. Die vorliegende Erfindung zeigt eine Verbundscheibe, insbesondere eine Verbundglasscheibe, welche eine erste Scheibe, eine zweite Scheibe und mindestens eine zwischen den beiden Scheiben angeordnete Thermoplast-Folie umfasst. Mindestens eine der beiden Scheiben ist in Form eines Flachglases ausgebildet und verfügt herstellungsbedingt auf mindestens einer Scheibenoberfläche, insbesondere auf beiden Scheibenoberflächen, über eine Mehrzahl länglicher Erhebungen (Wellenberge) und länglicher Einsenkungen (Wellentäler), die sich entlang einer ersten (Scheiben-)Richtung erstrecken und in einer zur ersten (Scheiben-)Richtung senkrechten zweiten (Scheiben-)Richtung alternierend angeordnet sind. Die erste Richtung entspricht in aller Regel einer Zugrichtung bei der Herstellung eines Glasbands aus dem die Scheibe gebildet ist, beispielsweise der Zugrichtung aus dem Floatbad (Zinnbad) einer im Floatverfahren hergestellten Scheibe (die Erhebungen bzw. Einsenkungen entsprechen den Floatlinien) oder der Zugrichtung aus dem Schmelzband einer im Fusion-Draw-Verfahren hergestellten Dünnglases (die Erhebungen bzw. Einsenkungen entsprechen den Ziehlinien). Die länglichen Erhebungen und länglichen Einsenkunen der Scheibe sind typischer Weise zueinander parallel und in einander abwechselnden Abfolge angeordnet.

Die Thermoplast-Folie der erfindungsgemäßen Verbundscheibe ist durch ein Extrusionsverfahren hergestellt, bei welchem plastifiziertes Material in Form einer Folie aus einer Extruder-Vorrichtung gefördert wird. Auch die Thermoplast-Folie weist fertigungsbedingt eine gewisse Welligkeit bzw. Unebenheit der Oberfläche auf. So verfügt mindestens eine Folienoberfläche, insbesondere beide Folienoberflächen, der Thermoplast-Folie über eine Mehrzahl länglicher Erhebungen (Wellenberge) und länglicher Einsenkungen (Wellentäler), die sich entlang einer ersten (Folien-)Richtung erstrecken und in einer zur ersten (Folien-)Richtung senkrechten zweiten (Folien-)Richtung alternierend angeordnet sind. Die erste Richtung entspricht der Extrusionsrichtung der Thermoplast-Folie. Die länglichen Erhebungen und länglichen Vertiefungen der Thermoplast-Folie sind typischer Weise zueinander parallel und in einander abwechselnden Abfolge angeordnet.

Die länglichen Erhebungen (Wellenberge) und Einsenkungen (Wellentäler) der Thermoplast-Folie beschreiben im Sinne der Erfindung die herstellungsbedingte, eigentlich unerwünschte Oberflächenwelligkeit und sind durch diese verursacht. Erfindungsgemäß beträgt der Abstand benachbarter Erhebungen beziehungsweise der Abstand benachbarter Einsenkungen größer oder gleich 50 mm. Dies ist zu unterscheiden von einer erwünschten Oberflächenrauigkeit, die häufig bewusst in Form von länglichen Erhebungen und Einsenkungen in die Folienoberfläche eingeprägt werden, um die Entlüftung beim Laminieren der Verbundscheibe zu begünstigen, wobei der Abstand benachbarter Erhebungen beziehungsweise Einsenkungen typischerweise kleiner als 1 mm beträgt.

Wesentlich für die vorliegende Erfindung ist, dass die länglichen Erhebungen (und länglichen Vertiefungen) mindestens einer Scheibe aus Flachglas in einem von 90° verschiedenen Winkel zur Extrusionsrichtung der Thermoplast-Folie, d.h. in einem von 90° verschiedenen Winkel zu den länglichen Erhebungen (und länglichen Einsenkungen) der Thermoplast-Folie, angeordnet sind. Vorteilhaft sind die länglichen Erhebungen in einem Winkel von 0° bis 45°, besonders bevorzugt 0°, zur Extrusionsrichtung der Thermoplast-Folie angeordnet.

Wie die Erfinder erstmals erkannt haben, passen sich Flachglasscheiben beim Laminieren der Form der Thermoplast-Folie an und nehmen somit eine gewisse Welligkeit durch die Welligkeit der Thermoplast-Folie an. Dieser Effekt tritt in besonderer Weise bei sehr dünnen Flachglasscheiben mit Dicken von weniger als 2,1 mm auf. Wie die Erfinder herausgefunden haben, kann durch die beanspruchte relative Anordnung mindestens einer Scheibe mit herstellungsbedingter Welligkeit und der Thermoplastfolie ein vorteilhafter Effekt auf die lokale Linsenwirkung der Scheibe erreicht werden. Ohne an eine Theorie gebunden zu sein, wird angegeben, dass durch die der Scheibe durch die Thermoplast-Folie auferlegte Welligkeit ein Ausgleich bzw. eine Vergleichmäßigung der herstellungsbedingten Welligkeit der Scheibe erreicht werden kann, so dass relativ große Unterschiede der lokalen optischen Brechkraft vermindert werden. Die optischen Eigenschaften der Scheibe werden dadurch deutlich verbessert, insbesondere treten geringere Verzerrungen von Gegenständen in Durchsicht auf. Die länglichen Erhebungen mindestens einer Scheibe sind zu diesem Zweck vorteilhaft in einem Winkel von 0° bis 45° zur Extrusionsrichtung der Thermoplast-Folie angeordnet, wobei derzeit davon ausgegangen wird, dass eine beste Wirkung im Hinblick auf eine Verringerung großer Unterschiede in der lokalen optischen Brechkraft dann erreicht werden kann, wenn die länglichen Erhebungen einer Scheibe in einem Winkel von 0° zur Extrusionsrichtung der Thermoplast-Folie angeordnet sind.

Der beabsichtige Effekt tritt in besonderer Weise bei sehr dünnen Scheiben auf, wobei erfindungsgemäß bevorzugt ist, dass mindestens eine Scheibe mit herstellungsbedingten länglichen Erhebungen und Vertiefungen eine Scheibendicke von weniger als 2,1 mm hat. Die Erfinder konnten zeigen, dass bei derart dünnen Scheiben ein besonders starker Effekt hinsichtlich einer Verminderung großer Unterschiede der lokalen optischen Brechkraft erreicht werden kann, da einerseits die Float- bzw. Ziehlinien bei dünneren Scheiben stärker ausgebildet sind und andererseits dünne Scheiben durch die Welligkeit der Thermoplast-Folie eine stärkere Veränderung beim Laminieren erfahren. Besonders vorteilhaft hat mindestens eine Scheibe mit einer herstellungsbedingten Welligkeit eine Scheibendicke im Bereich von 0,5 mm bis 1,1 mm. Derart dünne Scheiben sind vorteilhaft im Fusion-Draw-Verfahren hergestellt. Die Erfinder konnten zeigen, dass für diese Scheibendicke der erfindungsgemäße Effekt (Verbesserung optischer Eigenschaften) besonders stark auftritt.

Bei einer vorteilhaften Ausgestaltung der Erfindung hat eine Scheibe mit herstellungsbedingter Welligkeit eine Scheibendicke von weniger als 2,1 mm und die andere Scheibe (die ebenfalls eine herstellungsbedingte Welligkeit aufweisen kann) hat eine Scheibendicke im Bereich von 1,4 mm bis 2,6 mm. Falls beide Scheiben relativ dünn sind, kann in vorteilhafter Weise erreicht werden, dass der erfindungsgemäß beabsichtigte Effekt in signifikanter Weise bei beiden Scheiben auftritt. Alternativ, falls eine Scheibe dicker ist, kann in vorteilhafter Weise erreicht werden, dass der erfindungsgemäße Effekt in signifikanter Weise nur für die dünnere Scheibe auftritt, wobei durch die dickere Scheibe eine Verbesserung der Stabilität der Verbundscheibe erreicht wird.

Bei einer weiteren vorteilhaften Ausgestaltung der Erfindung hat eine Scheibe mit herstellungsbedingter Welligkeit eine Scheibendicke von weniger als 2,1 mm und die andere Scheibe (die ebenfalls eine herstellungsbedingte Welligkeit aufweisen kann) hat eine Scheibendicke von mindestens 2,1 mm, die insbesondere im Bereich von 2,1 mm bis 2,6 mm liegt. Hierbei tritt einerseits bei der dünneren Scheibe der vorteilhafte Effekt der Erfindung in signifikanter Weise auf, andererseits wird durch die dickere Scheibe eine erhebliche Verbesserung der Stabilität der Verbundscheibe bewirkt.

Gemäß vorliegender Erfindung können die erste Scheibe und/oder die zweite Scheibe herstellungsbedingt mit länglichen Erhebungen und Vertiefungen (Wellenstruktur) versehen sein, wobei für jede Scheibe obige Ausführungen in Bezug auf die relative Anordnung der länglichen Erhebungen bzw. Einsenkungen von Scheibe und Thermoplast-Folie separat gelten. Insbesondere kann bei zwei relativ dünnen Scheiben (Scheibendicke weniger als 2,1 mm) erfindungsgemäß eine besonders gute Verbesserung der optischen Eigenschaften der Verbundscheibe erreicht werden.

Die Thermoplast-Folie enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke der thermoplastischen Folie beträgt beispielsweise 0,2 mm bis 2 mm und liegt insbesondere im Bereich von 0,3 mm bis 1 mm.

Die erste und/oder zweite Scheibe mit herstellungsbedingter Welligkeit ist ein Flachglas, insbesondere ein im Floatglasverfahren hergestelltes Floatglas oder ein im Fusion-Draw-Verfahren hergestelltes Dünnglas. Es kann sich beispielsweise um ein Quarzglas, Borosilikatglas, Aluminosilikatglas oder Kalk-Natron-Glas handeln. Sehr dünne Gläser mit Dicken im Bereich von beispielsweise 0,5 mm bis 1,1 sind insbesondere im Fusion-Draw-Verfahren hergestellt.

Im verbauten Zustand weisen Verbundscheiben vom Typ Windschutzscheibe in aller Regel zwei in Hochrichtung sich erstreckende Scheibenränder auf, die beispielswiese an die nächstliegenden Karosseriehochstreben, z.B. A-Säulen, angrenzen, sowie zwei in Querrichtung sich erstreckende Scheibenränder, die beispielsweise dach- und motorraumseitig angeordnet sind. Die herstellungsbedingten länglichen Erhebungen und länglichen Einsenkungen der mindestens einen Einzelscheibe, insbesondere beider Einzelscheiben, verlaufen typischer Weise in Hochrichtung. In der industriellen Serienfertigung von Verbundscheiben wird die für die Laminierung benötigte Thermoplast-Folie typischer Weise entlang der Extrusionsrichtung aufgerollt und in entsprechender Weise abgerollt. Gemäß einer Ausgestaltung der Erfindung wird die Thermoplast-Folie so abgelängt und mit den beiden Einzelscheiben laminiert, dass die länglichen Erhebungen der Thermoplast-Folie parallel zu den herstellungsbedingten länglichen Erhebungen der Verbundscheibe angeordnet sind und sich demnach in Hochrichtung der Windschutzscheibe erstrecken.

Die Erfindung betrifft weiterhin ein Verfahren zum Herstellen einer wie oben beschrieben ausgebildeten, erfindungsgemäßen Verbundscheibe. Es umfasst die folgenden Schritte:
- Bereitstellen der ersten Scheibe,
- Bereitstellen der zweiten Scheibe,
   wobei mindestens eine Scheibe in Form eines Flachglases ausgebildet ist und auf mindestens einer Oberfläche längliche Erhebungen und längliche Einsenkungen aufweist,
- Laminieren der beiden Scheiben mit einer zwischen den beiden Scheiben angeordneten Thermoplast-Folie, wobei die Thermoplast-Folie auf mindestens einer Oberfläche längliche Erhebungen und längliche Einsenkungen aufweist, wobei die beiden Scheiben und die Thermoplast-Folie so angeordnet werden, dass die länglichen Erhebungen der mindestens einen Scheibe und die länglichen Erhebungen der Thermoplast-Folie in einem von 90° verschiedenen Winkel ausgerichtet sind.

Des Weiteren erstreckt sich die Erfindung auf die Verwendung der erfindungsgemäßen Verbundscheibe in Fortbewegungsmitteln für den Verkehr auf dem Lande, in der Luft oder zu Wasser, insbesondere in Kraftfahrzeugen und insbesondere als Windschutzscheibe in einem Kraftfahrzeug.

Die oben genannten Ausgestaltungen und Merkmale der Erfindung können allein oder in beliebigen Kombinationen vorgesehen sein.

Die Erfindung wird nun anhand von Ausführungsbeispielen näher erläutert, wobei Bezug auf die beigefügten Figuren genommen wird. Es zeigen:
- Fig. 1: eine schematische Darstellung einer von einer Rolle teilweise abgewickelten Thermoplast-Folie;
- Fig. 2: eine Querschnittansicht der Thermoplast-Folie gemäß der in Fig. 1 dargestellten Schnittlinie A-A;
- Fig. 3: eine schematische Darstellung der Anordnung von Einzelscheiben zum Ablängen der Thermoplast-Folie von Fig. 1;
- Fig. 4: eine Explosionsdarstellung der Verbundscheibe gemäß einer bevorzugten Ausführungsform der Erfindung;
- Fig. 5: eine Verbundscheibe, insbesondere eine Windschutzscheibe eines Kraftfahrzeugs, gemäß einer bevorzugten Ausführungsform der Erfindung;
- Fig. 6: ein Diagramm zur Veranschaulichung der lokalen optischen Brechkraft einer herkömmlichen Verbundscheibe (links) und einer erfindungsgemäßen Verbundscheibe (rechts);
- Fig. 7: ein Ablaufdiagramm eines Verfahrens zum Herstellen der erfindungsgemäßen Verbundscheibe gemäß einer bevorzugten Ausführungsform der Erfindung.

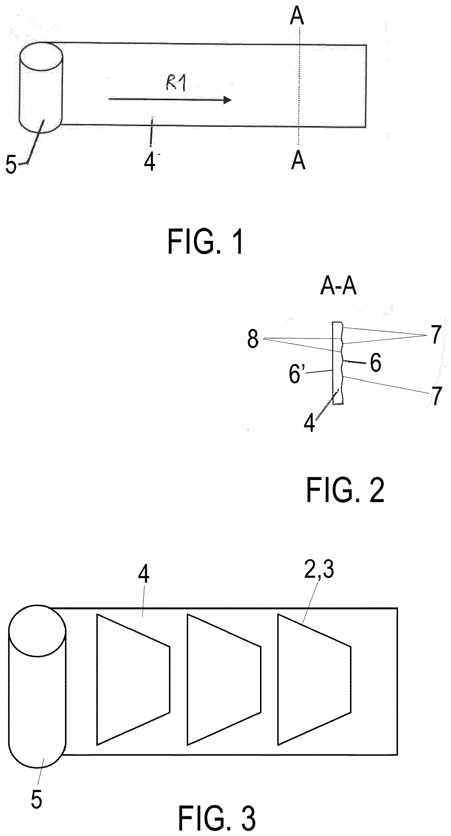

Sei zunächst Figur 1 betrachtet, worin eine schematische Darstellung einer von einer Rolle 5 teilweise abgewickelten Thermoplast-Folie 4 gezeigt ist. Die Thermoplast-Folie 4 besteht vorzugsweise aus PVB. Alternativ kann die ThermoplastFolie aus einem anderen geeigneten Material wie beispielsweise Polyamid oder Polyethylen bestehen. Die Thermoplast-Folie 4 ist durch Extrusion hergestellt, wobei die Extrusionsrichtung der Thermoplast-Folie 4 der Auf- bzw. Abwickelrichtung der Rolle 5 entspricht. In Fig. 1 ist die Extrusions- bzw. Abwickelrichtung mit dem Pfeil R1 gekennzeichnet.

Figur 2 zeigt eine Querschnittansicht der Thermoplast-Folie 4 gemäß der in Fig. 1 eingezeichneten Schnittlinie A-A. Erkennbar ist zumindest eine Oberfläche 6 der Thermoplast-Folie 4 wellig ausgebildet und weist eine Mehrzahl von der Oberfläche 6 vorspringender, länglicher Erhebungen 7 (im Weiteren als Folien-Erhebungen 7 bezeichnet) und die Oberfläche 6 vertiefender, länglicher Einsenkungen 8 (im Weiteren als Folien-Einsenkungen 8 bezeichnet) in paralleler Anordnung auf. Die Folien-Erhebungen 7 und Folien-Einsenkungen 8 erstrecken sich jeweils in Extrusionsrichtung R1. Quer zur Extrusionsrichtung sind die Folien-Erhebungen 7 und Folien-Einsenkungen 8 alternierend angeordnet. Die Folien-Erhebungen 7 und Folien-Einsenkungen 8 sind wellenförmig ausgebildet, so dass die Oberfläche 6 der Thermoplast-Folie eine Welligkeit aufweist. Es wird darauf hingewiesen, dass Figur 2 nur eine schematische Darstellung zeigt, typischer Weise ist auch die gegenüberliegende Oberfläche 6' in entsprechender Weise wellig ausgebildet und mit Folien-Erhebungen 7 und Folien-Einsenkungen 8 versehen.

Figur 3 zeigt eine schematische Darstellung zur Veranschaulichung einer bevorzugten Anordnung von (Einzel-)Scheiben 2, 3 relativ zur Thermoplast-Folie 4 zur Herstellung einer erfindungsgemäßen Verbundscheibe 1. Demnach wird die Thermoplast-Folie 4 derart abgelängt, dass die im verbauten Zustand in Querrichtung des Fahrzeugs sich erstreckenden Scheibenränder quer zur Extrusionsrichtung R1 angeordnet sind.

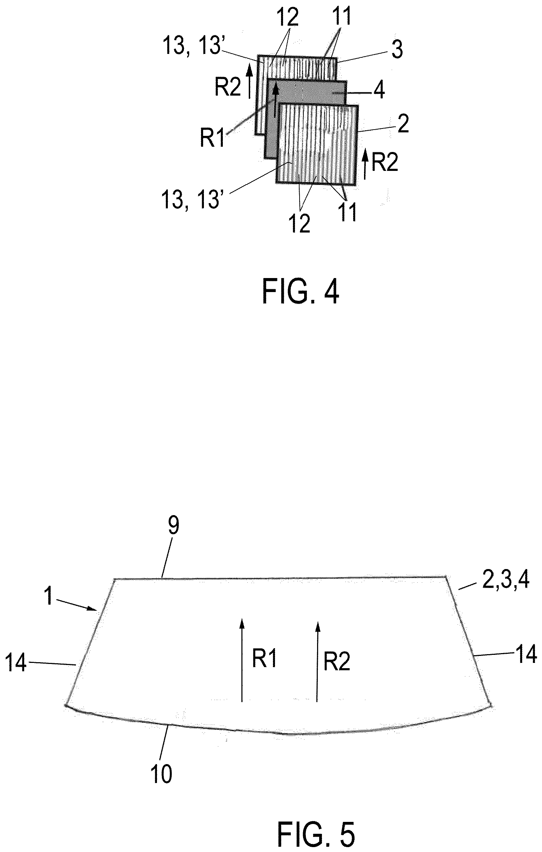

Fig. 4 zeigt eine Explosionsdarstellung der Verbundscheibe 1 gemäß einer bevorzugten Ausführungsform der Erfindung. Die Verbundscheibe 1 umfasst eine erste Scheibe 2 und eine zweite Scheibe 3, sowie zwischen den beiden Scheiben 2, 3 eine Thermoplast-Folie 4, welche von der Rolle 5 abgelängt ist. Jede Scheibe 2, 3 verfügt herstellungsbedingt über eine Mehrzahl von einer Oberfläche 13 vorspringender, länglicher Erhebungen 11 (im Weiteren als Scheiben-Erhebung 11 bezeichnet)und die Oberfläche 13 vertiefender, länglicher Einsenkungen 12 (im Weiteren als Scheiben-Einsenkung 12 bezeichnet) in paralleler Anordnung. Die Scheiben-Erhebungen 11 und Scheiben-Einsenkungen 12 erstrecken sich jeweils entlang einer Richtung, die in Fig. 4 mit dem Pfeil R2 bezeichnet ist. Quer zur Richtung R2 sind die Scheiben-Erhebungen 11 und Scheiben-Einsenkungen 12 alternierend angeordnet. Die Scheiben-Erhebungen 11 und Scheiben-Einsenkungen 12 sind wellenförmig ausgebildet, so dass die Oberfläche 13 jeder der beiden Scheiben 2, 3 eine Welligkeit aufweist. Typischer Weise sind beide einander gegenüberliegende Oberflächen 13, 13' einer jeden Scheibe 2, 3 wellig ausgebildet und weisen Scheiben-Erhebungen 11 und Scheiben-Einsenkungen 12 auf.

Wie in Figur 4 veranschaulicht, sind im laminierten Zustand die Scheiben-Erhebungen 11 und Scheiben-Einsenkungen 12 der ersten Scheibe 2 parallel zu den Scheiben-Erhebungen 11 und Scheiben-Einsenkungen 12 der zweiten Scheibe 3 angeordnet. Zudem sind die Scheiben-Erhebungen 11 und Scheiben-Einsenkungen 12 der beiden Scheiben 2, 3, parallel zur Extrusionsrichtung R1 bzw. parallel zu den Folien-Erhebungen 7 und Folien-Einsenkungen 8 angeordnet.

Des Weiteren ist die erste Scheibe 2 dünner als 2,1 mm ausgebildet. Die Scheibendicke der zweiten Scheibe 3 liegt im Bereich von 0,5 mm oder 1,1 mm. Alternativ kann vorgesehen sein, dass die Scheibendicke der zweiten Scheibe 3 größer als 2,1 mm ist und insbesondere im Bereich von 2,1 mm bis 2,6 mm liegt. Die erste Scheibe 2 und zweite Scheibe 3 bestehen aus Glas und sind beispielsweise im Floatglasverfahren oder Fusion-Draw-Verfahren hergestellt. Denkbar ist auch, dass nur die erste Scheibe 2 aus Glas besteht und Scheiben-Erhebungen 11 und Scheiben-Einsenkungen 12 aufweist, und dass die zweite Scheibe 3 aus einem Polymer gefertigt ist.

Fig. 5 zeigt eine weitere Ausgestaltung der erfindungsgemäßen Verbundscheibe 1, insbesondere zur Verwendung als Windschutzscheibe eines Kraftfahrzeugs. Wie in Fig. 5 veranschaulicht, umfasst die Verbundscheibe 1 eine erste Scheibe 2, eine zweite Scheibe 3 und eine Thermoplast-Folie 4. Die Verbundscheibe 1 weist vier Scheibenränder auf, nämlich einen oberen Scheibenrand 9 und einen unteren Scheibenrand 10, die sich im verbauten Zustand in (Fahrzeug)Querrichtung erstrecken, und zwei seitliche Scheibenränder 14, die sich im verbauten Zustand in (Fahrzeug-)Hochrichtung erstrecken. Die Folien-Erhebungen 7 und Folien-Einsenkungen 8 erstrecken sich jeweils entlang einer kürzesten Verbindungslinie zwischen dem oberen Scheibenrand 9 und dem unteren Scheibenrand 10 (d.h. Extrusionrichtung R1). Die erste und/oder zweite Scheibe 2, 3 ist als Flachglas ausgebildet und verfügt über Scheiben-Erhebungen 11 und Scheiben-Einsenkungen 12, die sich ebenfalls entlang einer kürzesten Verbindungslinie zwischen dem oberen Scheibenrand 9 und dem unteren Scheibenrand 10 (d.h. Zugrichtung R2) erstrecken.

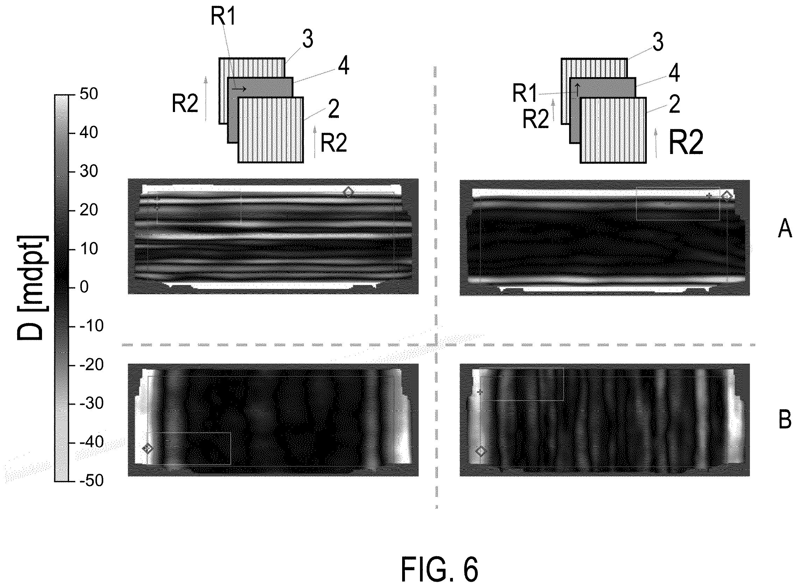

Fig. 6 zeigt ein Diagramm, in dem die lokale optische Brechkraft D einer herkömmlichen Verbundglasscheibe (links) und einer erfindungsgemäßen Verbundglasscheibe 1 (rechts) angegeben ist. Die erste Scheibe 2 ist ein 0,5 mm dickes Aluminosilikat-Glas, welches im Fusion-Draw-Verfahren hergestellt ist, die zweite Scheibe 3 ein 2,1 mm dickes Kalk-Natron-Glas, das im Floatglasverfahren hergestellt ist.

In den beiden linken Abbildungen, welche dem herkömmlichen Fall entsprechen, ist die Extrusionsrichtung R1 der Thermoplast-Folie 4 in einem Winkel von 90° zur Richtung R2 der Scheiben-Erhebungen 11 und Scheiben-Einsenkungen 12 der beiden Scheiben 2, 3 gerichtet. In den beiden rechten Abbildungen, welche der Erfindung entsprechen, ist die Extrusionsrichtung R1 der Thermoplast-Folie 4 in einem Winkel von 0° zur Richtung R2 der Scheiben-Erhebungen 11 und Scheiben-Einsenkungen 12 der beiden Scheiben 2, 3 gerichtet, d.h. die Extrusionsrichtung R1 und die Richtung R2 sind zueinander parallel.

In dem Diagramm ist die optische Brechkraft D [mdpt] in der Durchsicht durch die Verbundscheiben anhand unterschiedlicher Grautöne veranschaulicht. Die beiden oberen Abbildungen geben die horizontale Optik (d.h. Änderung der optischen Brechkraft in horizontaler Richtung) wider (Fall A). Die beiden unteren Abbildungen geben die vertikale Optik (d.h. Änderung der optischen Brechkraft in vertikaler Richtung) wider (Fall B).

Wie durch die beiden oberen Abbildungen (Fall A) gut erkennbar, kann bei der erfindungsgemäßen Verbundscheibe (rechte Abbildung) vor allem im Innenbereich eine erhebliche Verminderung der Änderungen der optischen Brechkraft D erreicht werden. Im Vergleich zum herkömmlichen Fall ist die optische Brechkraft D der Verbundscheibe wesentlich homogener, so dass die Durchsicht verbessert ist. Bezüglich der vertikalen Optik (Fall B, untere Abbildungen) scheint eine geringfügige Verschlechterung bei der Erfindung aufzutreten (Verstärkung der Änderungen der optischen Brechkraft D), jedoch macht sich dies in der Praxis nur wenig bemerkbar, da die Änderungen der optischen Brechkraft D in vertikaler Richtung typischer Weise weitaus weniger störend sind als Änderungen der optischen Brechkraft in horizontaler Richtung. Insofern kann durch die erfindungsgemäße Verbundscheibe eine signifikante Verbesserung der optischen Eigenschaften in Durchsicht erreicht werden.

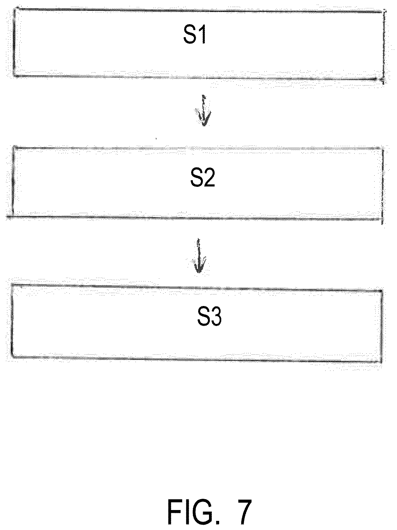

Fig. 7 zeigt ein Ablaufdiagramm eines Verfahrens zum Herstellen der Verbundscheibe gemäß einer bevorzugten Ausführungsform der Erfindung.

Das Verfahren umfasst das Bereitstellen (S1) der ersten Scheibe 2, das Bereitstellen (S2)der zweiten Scheibe 3, und ein Laminieren (S3) der beiden Scheiben 2, 3 mit einer zwischen den beiden Scheiben angeordneten Thermoplast-Folie 4, wobei die beiden Scheiben 2, 3 und die Thermoplast-Folie 4 so angeordnet werden, dass die herstellungsbedingten Scheiben-Erhebungen 11 und Scheiben-Einsenkungen 12 der ersten Scheibe 2 und/oder zweiten Scheibe 3 in einem von 90° verschiedenen Winkel, insbesondere in einem Winkel von 0° bis 45°, vorzugsweise 0°, zur Extrusionsrichtung der Thermoplast-Folie 4 ausgerichtet sind.

Aus vorstehenden Ausführungen ergibt sich, dass durch die Erfindung eine Verbundscheibe mit signifikant verminderten lokalen Änderungen der optischen Brechkraft und somit einer verbesserten Durchsicht bereitgestellt wird. Herkömmliche Verfahren zur Herstellung von Verbundscheiben können in einfacher Weise modifiziert werden, um eine kostengünstige Herstellung der Verbundscheibe zu erreichen.

### Bezugszeichenliste

- 1: Verbundglasscheibe
- 2: erste Scheibe
- 3: zweite Scheibe
- 4: Thermoplast-Folie
- 5: Rolle
- 6,6': Folienoberfläche
- 7: Folien-Erhebung
- 8: Folien-Einsenkung
- 9: oberer Scheibenrand
- 10: unterer Scheibenrand
- 11: Scheiben-Erhebung
- 12: Scheiben-Einsenkung
- 13, 13': Scheibenoberfläche
- 14: seitlicher Scheibenrand

## Patentansprüche

1. Verbundscheibe (1), welche eine erste Scheibe (2), eine zweite Scheibe (3) und mindestens eine zwischen den beiden Scheiben (2, 3) angeordnete Thermoplast-Folie (4) umfasst, wobei
- mindestens eine Scheibe (2, 3) in Form eines Flachglases ausgebildet ist und mindestens eine Scheibenoberfläche (13, 13') eine Mehrzahl länglicher Erhebungen (11) und länglicher Einsenkungen (12) aufweist, die sich entlang einer ersten Scheibenrichtung erstrecken und in einer zur ersten Scheibenrichtung senkrechten zweiten Scheibenrichtung alternierend angeordnet sind,
- die Thermoplast-Folie (4) im Extrusionsverfahren hergestellt ist und mindestens eine Folienoberfläche (6, 6') eine Mehrzahl länglicher Erhebungen (7) und länglicher Einsenkungen (8) aufweist, die sich entlang einer ersten Folienrichtung erstrecken und in einer zur ersten Folienrichtung senkrechten zweiten Folienrichtung alternierend angeordnet sind, wobei der Abstand benachbarter Erhebungen (7) und der Abstand benachbarter Einsenkungen (8) der Thermoplast-Folie (4) größer oder gleich 50 mm betragen, und wobei die länglichen Erhebungen (11) der mindestens einen Scheibe (2, 3) in einem von 90° verschiedenen Winkel zu den länglichen Erhebungen (7) der Thermoplast-Folie (4) angeordnet sind.

2. Verbundscheibe (1) nach Anspruch 1, wobei die länglichen Erhebungen (11) der mindestens einen Scheibe (2, 3) in einem Winkel von 0° bis 45°, vorzugsweise 0°, zu den länglichen Erhebungen (7) der Thermoplast-Folie (4) angeordnet sind.

3. Verbundscheibe (1) nach einem der Ansprüche 1 bis 2, wobei mindestens eine Scheibe (2, 3) mit länglichen Erhebungen (11) und länglichen Einsenkungen (12) eine Scheibendicke von weniger als 2,1 mm hat.

4. Verbundscheibe nach Anspruch 3, wobei mindestens eine Scheibe (2, 3) mit länglichen Erhebungen (11) und länglichen Einsenkungen (12) eine Scheibendicke im Bereich von 0,5 mm bis 1,1 mm hat.

5. Verbundscheibe nach Anspruch 3, wobei eine Scheibe (2) längliche Erhebungen (11) und längliche Einsenkungen (12) aufweist und eine Scheibendicke von weniger als 2,1 mm hat, und dass die andere Scheibe (3) eine Scheibendicke im Bereich von 1,4 mm bis 2,6 mm hat.

6. Verbundscheibe nach Anspruch 3, wobei eine Scheibe (2) längliche Erhebungen (11) und längliche Einsenkungen (12) aufweist und eine Scheibendicke von weniger als 2,1 mm hat, und dass die andere Scheibe (3) eine Scheibendicke von mindestens 2,1 mm, insbesondere im Bereich von 2,1 mm bis 2,6 mm, hat.

7. Verbundscheibe nach einem der Ansprüche 1 bis 6, wobei die erste Scheibe (2) und zweite Scheibe (3) jeweils längliche Erhebungen (11) und länglichen Einsenkungen (12) aufweisen.

8. Verbundscheibe nach Anspruch 7, wobei die länglichen Erhebungen (11) und länglichen Einsenkungen (12) der ersten Scheibe (2) parallel angeordnet sind zu den länglichen Erhebungen (11) und länglichen Einsenkungen (12) der zweiten Scheibe (3).

9. Verbundscheibe nach einem der Ansprüche 1 bis 8, wobei mindestens eine Scheibe (2, 3) mit länglichen Erhebungen (11) und länglichen Einsenkungen (12) im Floatglasverfahren oder Fusion-Draw-Verfahren hergestellt ist.

10. Verbundscheibe nach einem der Ansprüche 1 bis 9, wobei die Thermoplast-Folie (4) aus Polyvinylbutyral (PVB) besteht.

11. Verbundscheibe nach einem der Ansprüche 1 bis 10, welche zwei im verbauten Zustand in Querrichtung sich erstreckende Scheibenränder (9, 10) und zwei im verbauten Zustand in Hochrichtung sich erstreckende Scheibenränder (14) aufweist, wobei sich die länglichen Erhebungen (11) und länglichen Einsenkungen (12) der ersten Scheibe (2) und/oder zweiten Scheibe (3) entlang einer Linie, vorzugsweise kürzesten Linie, erstrecken, welche die beiden in Querrichtung sich erstreckenden Scheibenränder (9, 10) miteinander verbindet.

12. Verfahren zum Herstellen einer Verbundscheibe (10) nach einem der Ansprüche 1 bis 11, welches die folgenden Schritte umfasst:
- Bereitstellen der ersten Scheibe (2),
- Bereitstellen der zweiten Scheibe (3),
- Laminieren der beiden Scheiben (2,3) mit mindestens einer zwischen den beiden Scheiben (2, 3) angeordneten Thermoplast-Folie (4),
**dadurch gekennzeichnet, dass** die beiden Scheiben (2, 3) und die ThermoplastFolie (4) so angeordnet werden, dass die länglichen Erhebungen (11) mindestens einer Scheibe (2, 3) in einem von 90° verschiedenen Winkel zu den länglichen Erhebungen (7) der Thermoplast-Folie (4) angeordnet sind.

13. Verwendung der Verbundscheibe (1) nach einem der Ansprüche 1 bis 11 in Fortbewegungsmitteln für den Verkehr auf dem Lande, in der Luft oder zu Wasser, insbesondere in Kraftfahrzeugen und insbesondere als Windschutzscheibe in einem Kraftfahrzeug.

## Claims

1. Composite pane (1) that comprises a first pane (2), a second pane (3), and at least one thermoplastic film (4) arranged between the two panes (2, 3), wherein
- at least one pane (2, 3) is in the form of a flat glass and at least one pane surface (13, 13') has a plurality of elongated elevations (11) and elongated depressions (12) that extend along a first pane direction and are alternatingly arranged in a second pane direction perpendicular to the first pane direction,
- the thermoplastic film (4) is produced by extrusion and at least one film surface (6, 6') has a plurality of elongated elevations (7) and elongated depressions (8) that extend along a first film direction and are alternatingly arranged in a second film direction perpendicular to the first film direction, wherein the distance between adjacent elevations (7) and the distance between adjacent depressions (8) of the thermoplastic film (4) are greater than or equal to 50 mm, and wherein the elongated elevations (11) of the at least one pane (2, 3) are arranged at an angle different from 90° relative to the elongated elevations (7) of the thermoplastic film (4).

2. Composite pane (1) according to claim 1, wherein the elongated elevations (11) of the at least one pane (2, 3) are arranged at an angle from 0° to 45°, preferably 0°, relative to the elongated elevations (7) of the thermoplastic film (4).

3. Composite pane (1) according to one of claims 1 through 2, wherein at least one pane (2, 3) with elongated elevations (11) and elongated depressions (12) has a pane thickness of less than 2.1 mm hat.

4. Composite pane according to claim 3, wherein at least one pane (2, 3) with elongated elevations (11) and elongated depressions (12) has a pane thickness in the range from 0.5 mm to 1.1 mm.

5. Composite pane according to claim 3, wherein one pane (2) has elongated elevations (11) and elongated depressions (12) and has a pane thickness of less than 2.1 mm, and the other pane (3) has a pane thickness in the range from 1.4 mm to 2.6 mm.

6. Composite pane according to claim 3, wherein one pane (2) has elongated elevations (11) and elongated depressions (12) and has a pane thickness of less than 2.1 mm, and the other pane (3) has a pane thickness of at least 2.1 mm, in particular in the range from 2.1 mm to 2.6 mm.

7. Composite pane according to one of claims 1 through 6, wherein the first pane (2) and second pane (3) have in each case elongated elevations (11) and elongated depressions (12).

8. Composite pane according to claim 7, wherein the elongated elevations (11) and elongated depressions (12) of the first pane (2) are arranged parallel relative to the elongated elevations (11) and elongated depressions (12) of the second pane (3).

9. Composite pane according to one of claims 1 through 8, wherein at least one pane (2, 3) with elongated elevations (11) and elongated depressions (12) is produced in the float glass method or the fusion draw method.

10. Composite pane according to one of claims 1 through 9, wherein the thermoplastic film (4) is made of polyvinyl butyral (PVB).

11. Composite pane according to one of claims 1 through 10, which has two pane edges (9, 10) extending in the transverse direction in the installed state and two pane edges (14) extending in the vertical direction in the installed state, wherein the elongated elevations (11) and elongated depressions (12) of the first pane (2) and/or the second pane (3) extend along a line, preferably the shortest line that connects the two pane edges (9, 10) extending in the transverse direction to one another.

12. Method for producing a composite pane (10) according to one of claims 1 through 11, which comprises the following steps:
- Providing the first pane (2),
- Providing the second pane (3),
- Laminating the two panes (2, 3) with at least one thermoplastic film (4) arranged between the two panes (2, 3),
**characterized in that** the two panes (2, 3) and the thermoplastic film (4) are arranged such that the elongated elevations (11) at least of one pane (2, 3) are arranged at an angle different from 90° relative to the elongated elevations (7) of the thermoplastic film (4).

13. Use of the composite pane (1) according to one of claims 1 through 11 in means of transportation for travel on land, in the air, or on water, in particular in motor vehicles and in particular as a windshield in a motor vehicle.

## Revendications

1. Vitre composite (1) qui comprend une première vitre (2), une deuxième vitre (3) et au moins un film thermoplastique (4) disposé entre les deux vitres (2, 3), dans laquelle
- au moins une vitre (2, 3) est sous la forme d'un verre plat et au moins une surface de vitre (13, 13') a une pluralité d'élévations allongées (11) et de dépressions allongées (12) qui s'étendent le long d'une première direction de vitre et sont disposées alternativement dans une seconde direction de vitre perpendiculaire à la première direction de vitre,
- le film thermoplastique (4) est produit par extrusion et au moins une surface de film (6, 6') a une pluralité d'élévations allongées (7) et de dépressions allongées (8) qui s'étendent le long d'une première direction de film et sont disposées en alternance dans une seconde direction de film perpendiculaire à la première direction de film, dans lequel la distance entre des élévations adjacentes (7) et la distance entre des dépressions adjacentes (8) du film thermoplastique (4) sont supérieures ou égales à 50 mm, et dans lequel les élévations allongées (11) de la au moins une vitre (2, 3) sont disposées selon un angle différent de 90° par rapport aux élévations allongées (7) du film thermoplastique (4).

2. Vitre composite (1) selon la revendication 1, dans laquelle les élévations allongées (11) de la au moins une vitre (2, 3) sont disposées selon un angle de 0° à 45°, de préférence 0°, par rapport aux élévations allongées (7) du film thermoplastique (4).

3. Vitre composite (1) selon l'une des revendications 1 à 2, dans laquelle au moins une vitre (2, 3) avec des élévations allongées (11) et des dépressions allongées (12) présente une épaisseur de vitre inférieure à 2,1 mm.

4. Vitre composite selon la revendication 3, dans laquelle au moins une vitre (2, 3) avec des élévations allongées (11) et des dépressions allongées (12) a une épaisseur de vitre dans la gamme de 0,5 mm à 1,1 mm.

5. Vitre composite selon la revendication 3, dans laquelle une vitre (2) a des élévations allongées (11) et des dépressions allongées (12) et a une épaisseur de vitre inférieure à 2,1 mm, et l'autre vitre (3) a une épaisseur de vitre dans la gamme de 1,4 mm à 2,6 mm.

6. Vitre composite selon la revendication 3, dans laquelle une vitre (2) a des élévations allongées (11) et des dépressions allongées (12) et a une épaisseur de vitre inférieure à 2,1 mm, et l'autre vitre (3) a une épaisseur de vitre d'au moins 2,1 mm, en particulier dans la gamme de 2,1 mm à 2,6 mm.

7. Vitre composite selon l'une des revendications 1 à 6, dans laquelle la première vitre (2) et la deuxième vitre (3) présentent chacune des élévations allongées (11) et des dépressions allongées (12).

8. Vitre composite selon la revendication 7, dans laquelle les élévations allongées (11) et les dépressions allongées (12) de la première vitre (2) sont disposées parallèlement aux élévations allongées (11) et aux dépressions allongées (12) de la deuxième vitre (3).

9. Vitre composite selon l'une des revendications 1 à 8, dans laquelle au moins une vitre (2, 3) avec des élévations allongées (11) et des dépressions allongées (12) est produite selon le procédé de verre flotté ou le procédé d'étirage par fusion.

10. Vitre composite selon l'une des revendications 1 à 9, dans laquelle le film thermoplastique (4) est en polyvinylbutyral (PVB).

11. Vitre composite selon l'une des revendications 1 à 10, qui présente deux bords de vitre (9, 10) s'étendant dans la direction transversale à l'état installé et deux bords de vitre (14) s'étendant dans la direction verticale à l'état installé, dans laquelle les élévations allongées (11) et les dépressions allongées (12) de la première vitre (2) et/ou de la deuxième vitre (3) s'étendent le long d'une ligne, de préférence la ligne la plus courte qui relie les deux bords de vitre (9, 10) s'étendant dans la direction transversale l'un à l'autre.

12. Procédé de fabrication d'une vitre composite (10) selon l'une des revendications 1 à 11, qui comprend les étapes suivantes :
- Fournir la première vitre (2),
- Fournir la deuxième vitre (3),
- Stratification des deux vitres (2, 3) avec au moins un film thermoplastique (4) disposé entre les deux vitres (2, 3),
**caractérisé en ce que** les deux vitres (2, 3) et le film thermoplastique (4) sont disposés de telle sorte que les élévations allongées (11) d'au moins une vitre (2, 3) sont disposées selon un angle différent de 90° par rapport aux élévations allongées (7) du film thermoplastique (4).

13. Utilisation de la vitre composite (1) selon l'une des revendications 1 à 11 dans des moyens de transport pour des déplacements sur terre, dans l'air, ou sur l'eau, notamment dans des véhicules automobiles et en particulier comme pare-brise dans un véhicule automobile.
